# EUROPEAN PATENT SPECIFICATION

(11) **EP 1 361 919 B1**
(45) Date of publication and mention of the grant of the patent: **11.05.2005**
(21) Application number: 02700437.3
(22) Date of filing: 20.02.2002
(51) Int. Cl.: B01J 8/06, B01J 8/08

(54) **REACTOR FOR CONDUCTING ENDOTHERMIC REACTIONS**
REAKTOR ZUR DURCHFÜHRUNG VON ENDOTHERMEN REAKTIONEN
REACTEUR POUR REALISER DES REACTIONS ENDOTHERMIQUES

(30) Priority: 21.02.2001 GB 0104254
(43) Date of publication of application: 19.11.2003
(73) Proprietor: Protensive Limited, Cambridge CB2 1NT (GB)
(72) Inventor: GOUGH,A. Department of Chemical and Process Engin., Newcastle upon Tyne NE1 7RU (GB)
(74) Representative: Harrison Goddard Foote
(86) International application number: PCT/GB2002/000715
(87) International publication number: WO 2002/066150

(56) References cited:
- EP-A- 0 206 535
- EP-A- 0 579 942
- EP-A- 1 048 343
- US-A- 5 039 510
- PATENT ABSTRACTS OF JAPAN vol. 1997, no. 10, 31 October 1997 (1997-10-31) -& JP 09 165202 A (ISHIKAWAJIMA HARIMA HEAVY IND CO LTD), 24 June 1997 (1997-06-24)

## Description

The present invention relates to a reactor adapted to conduct endothermic reactions or to heat a fluid passing therethrough.

Several very important reactions in the chemical process industry require large amounts of heat at high temperatures. There are a number of known ways to supply this heat, two of the most common being: i) to conduct the reaction in a vessel suspended in a furnace, and ii) to preheat a feedstock to a reactor in a furnace or by other means and to allow the temperature of a reactant stream to decrease as the reaction proceeds. Neither of these solutions is ideal. Among the disadvantages are the capital cost of large furnaces, the non-optimum temperature profile through the reactor, poor heat transfer and large pressure drop.

Examples of reactions conducted in type i) reactors include the thermal cracking of hydrocarbons to produce olefins, and the steam reforming of methane to produce hydrogen or synthesis gas. Examples of reactions conducted in type ii) reactors include the dehydrogenation of alkanes to alkenes or alkadienes and the dehydrocylisation (also known as reforming) of naphtha to produce gasoline.

There have been several attempts to improve these reactors. Many have attempted to produce the required heat by combustion of a fuel mixed in with the process fluid so as to generate the heat *in situ*. This has the disadvantage that combustion products must then be separated from the desired product and it is often impossible to avoid degrading valuable feedstock. Another approach is to combust a fuel substantially in a coating of catalyst on one side of a heat exchanger and to transfer the heat by conduction to the endothermic reaction in an adjacent channel of the exchanger. Various devices have been described for performing the reaction in this way, but with many of them construction and the insertion or renewal of the catalyst prove difficult.

A further problem is that, particularly where methane or natural gas is used as a fuel, the rate of reaction and therefore the rate of heat generation is dependent on the fuel concentration, the rate decreasing as the fuel is consumed. With a once-through reactor, this leads to a rapid generation of heat at the inlet end and a slow generation thereof at the exit end. This means that the exit end of the reactor operates inefficiently. It is therefore often necessary to provide additional means to ensure that unconverted fuel does not escape in the exhaust, leading to undesirable environmental effects.

It is known from EP 0 124 226 to provide a reactor for conducting an endothermic steam reforming reaction. The reactor may comprise a double-tube reactor having a steam reforming catalyst coated on the outside of an inner tube. Alternatively, a set of inner tubes may be mounted in a first tube plate and a set of outer tubes in a second tube plate, the tube plates being disposed across a cylindrical shell so as to define a heat exchange zone (provided with a heat source), a reactants feed zone and a products offtake zone. The heat source is a burner, to be fed with a product of the endothermic reaction, followed by a secondary reforming catalyst. The reactor works by transferring heat inwardly from the burner outside the outer tubes to the endothermic reaction taking place within the outer tubes.

It is also known from US 5,266,281 to provide a double-tube reactor having a plurality in inner and outer tube assemblies, each of the assemblies having a reaction annular volume between the inner tube and the outer tube and a closed centre plug within the inner tube forming an annular thermal exchange volume between the centre plug and the inner tube to obtain desired temperature control of exothermic and endothermic catalytic chemical reactions. No catalyst is provided between the centre plug and the inner tube, and no reaction takes place within the thermal exchange volume, and the outer tube is surrounded by a boiling water jacket. Furthermore, heat generated by way of an exothermic reaction flows inwardly to the thermal exchange volume from a surrounding catalyst.

According to the present invention, there is provided a reactor comprising a shell having at least a first inlet, a first outlet, a second inlet and a second outlet, and an internal structure which divides the shell into first and second non-communicating volumes, the first inlet and first outlet being associated with the first volume and the second inlet and second outlet being associated with the second volume, wherein the internal structure comprises a first member which extends internally across the shell so as to divide the shell into said first and second volumes, the first member having at least one elongate pocket with an internal and an external surface, the pocket extending into the first volume, and a second member which extends internally across the shell in the second volume and which carries at least one elongate conduit having an internal and an external surface, the conduit allowing communication through the second member and being received by the at least one pocket, characterised in that a catalyst adapted to promote an exothermic reaction is provided at the internal surface of the at least one elongate conduit such that there is defined a pathway through the reactor along which a reactant capable of undergoing an exothermic reaction may be passed, the pathway leading from the second inlet, between the external surface of the at least one conduit and the internal surface of the at least one pocket, through the at least one conduit and thence to the second outlet.

During operation of the reactor, a reactant capable of undergoing an exothermic reaction supplied to the second inlet passes firstly between the external surface of the at least one conduit and the internal surface of the at least one pocket, secondly through the at least one conduit and thence to the second outlet, heat being generated by the exothermic reaction being promoted by the catalyst, and at least part of which heat is transferred outwardly from the at least one conduit and at least one pocket to the first volume where it may be used to support an endothermic reaction taking place in the first volume.

The catalyst may additionally be provided at an internal surface of the at least one pocket or an external surface of the at least one conduit.

Preferably, there is provided a plurality of elongate pockets and elongate conduits, each pocket receiving an associated conduit. The conduits preferably extend deeply into the pockets so as to define a flowpath through the second volume passing from the second inlet into the pockets, then passing along inside the pockets and over external surfaces of the conduits until the distal ends of the conduits, deep in the pockets, are reached, whereupon the flowpath passes into the distal ends of the conduits and reverses direction back along inside the conduits until it passes through the second member and out of the second outlet. This flowpath may be reversed by configuring the second outlet as an inlet and the second inlet as an outlet. A flowpath through the first volume is defined as passing from the first inlet, along external surfaces of the pockets and out of the first outlet.

When the reactor is in use, a heat-generating reactant or reactants, preferably in a gaseous state, are supplied through the flowpath through the second volume and reactants for an endothermic reaction or a fluid to be heated are supplied through the flowpath through the first volume. In a preferred embodiment, the catalyst is a combustion catalyst and a combustible reactant or mixture of reactants is supplied through the flowpath through the second volume. The combustion catalyst helps to promote combustion of the combustible reactant or mixture of reactants in the flowpath through the second volume. Heat generated through combustion of the combustible reactant or mixture of reactants in the flowpath through the second volume is available for outward transfer to the flowpath through the first volume from external surfaces of the pockets, this heat helping to promote the endothermic reaction which takes place in the first volume or to heat a fluid passing therethrough.

In a particularly preferred embodiment, combustion catalyst is provided at internal and external surfaces of the conduits and internal surfaces of the pockets. Heat generated by combustion on the internal surfaces of the pockets is transferred outwardly, mainly by conduction, to the flowpath through the first volume. A mixture of radiation and convection transfers heat generated on the surfaces of the conduits outwardly to the internal surfaces of the pockets, from where it is transferred, mainly by conduction, to the external surfaces of the pockets and thence outwardly into the first volume. Heat transfer from the surfaces of the conduits to the surfaces of the pockets is relatively inefficient, thus the surfaces of the conduits will be at a considerably higher temperature than the surfaces of the pockets and the rate of combustion will therefore generally be considerably greater at the catalyst at the surfaces of the conduits than at the catalyst at the internal surfaces of the pockets. The combustible reactant or mixture of reactants passing from the bottom of the pockets and along inside the conduits will continue to combust and, since heat transfer from the surfaces of the conduits is not efficient, the temperature inside the conduits will tend to be increased even further, thus helping to promote substantially complete combustion. Advantageously, heat from the substantially combusted reactant or mixture of reactants may be transferred to fresh combustible reactant or mixture of reactants being input through the second inlet by arranging the flowpath through the second volume appropriately.

It is to be understood that the combustion catalyst may be provided at the internal surfaces of the conduits, and optionally also at the external surfaces or at the internal surfaces of the pockets. The combustion catalyst is preferably coated onto the surfaces, but may alternatively be packed into or around the conduits and/or the pockets. The combustion catalyst may be coated or otherwise provided to predetermined thicknesses depending on any operational requirements of the reactor. For example, the combustion catalyst may be coated to different thicknesses on different surfaces, and may vary in thickness along a given surface. This can help to tailor the heat generating characteristics of the reactor to specific reactions and to provide increased or decreased local heat generation as required in different regions of the reactor. If desired, different combustion catalyst formulations may be provided in different regions of the flowpath through the second volume, for example on different surfaces of the conduits or the pockets.

Where the endothermic reaction requires a catalyst, an appropriate catalyst may be coated on or otherwise provided on the external surfaces of the pockets in the flowpath through the first volume. The appropriate catalyst may alternatively or additionally be provided elsewhere along the flowpath through the first volume, for example by way of being packed or otherwise provided around the external surfaces of the pockets.

For endothermic reactions where continuous deactivation of the appropriate catalyst occurs over a short time period (e.g. alkane dehydrogenations), the outer shell of the reactor, at least in the region which immediately surrounds the pockets, may be provided with at least one additional inlet and one additional outlet so as to allow continuous addition and removal of the appropriate catalyst while the reactor is on-line. The pockets may be physically arranged and shaped (e.g. having an elongate polygonal cross-section with pointed ends) so as to promote an even flow of particles of the appropriate catalyst therebetween.

In some embodiments, an insert may be placed inside the conduits so as to increase their ability to retain a combustion catalyst or the like. For example, a wire helix, a metal mesh or a ceramic foam insert may be provided, the insert preferably having good catalyst adhesion characteristics.

In one embodiment, the pockets are in the form of blind-ended tubes extending generally transversely from the first member, which first member comprises a first tube plate. In this embodiment, the elongate conduits are also in the form of tubes, these tubes being open-ended and of a smaller diameter than the blind-ended tubes, and extend generally transversely from the second member, which comprises a second tube plate. The tubes may be of circular, elliptical, polygonal or any appropriate cross-section.

Alternatively, the pockets may be in the form of generally flattened elongate but wide sheaths and the elongate conduits may be shaped similarly but sized so as to fit inside the pockets.

The pockets and conduits may take any appropriate mutually complementary forms which serve to define a flowpath as described hereinbefore. It is particularly preferred that the pockets and conduits are shaped so as to allow the conduits to be easily withdrawn from the pockets by opening the shell and moving the first and second members away from each other. In this way, it is possible to gain access to the catalyst provided on one or other or both of the pockets and conduits and thus to refurbish or replace used, depleted or poisoned catalyst in a relatively simple manner.

In order to facilitate access to the pockets and conduits, the shell is preferably provided with means for separating the first and second members. For example, the shell may have a removable end plate or section, or may comprise two body sections which are releasably attachable to each other, for example by way of a clamping arrangement or other appropriate mechanism.

The conduits may be provided with fins or other appropriate extended structures on at least portions of their external surfaces so as to aid heat transfer.

In embodiments where the first and second members are spaced from each other so as to define a region in which portions of the conduits proximal to the second member are exposed to a generally open part of the second volume, an appropriate packing may be provided around or between the conduits so as to aid heat transfer. In some embodiments, the packing may be thermally conductive; in others, it may be preferable for the packing to be an insulating material. The portions of the conduits proximal to the second member may be provided with fins or other appropriate extended structures on at least portions of their external surfaces so as to aid heat transfer.

The provision of fins or extended structures on the conduits or the provision of packing thereabout can also prevent uncontrolled ignition of incoming combustible reactant or mixture of reactants in the second volume by keeping any gaps through which the combustible reactant or mixtures of reactants pass below flame trap dimensions.

The portions of the conduits located within the pockets may also be provided with fins or other appropriate extended structures on at least portions of their external surfaces. This can help to provide additional surface area on which combustion catalyst or the like can be coated or otherwise provided. Particularly advantageous may be the insertion of a packing, which may itself be made of or include a catalytic material, or which may simply provide additional surface area onto which catalyst may be coated, into inside portions of the conduits within the pockets so as to increase an amount of combustion catalyst in poor thermal contact with the conduit walls and thus to aid complete combustion.

The pockets may be provided with fins or other appropriate extended structures on at least portions of their external surfaces so as to aid heat transfer.

The conduits may be made of an insulating material or a material having poor thermal conductivity. Alternatively, the conduits may be made out of a thermally conductive material such as a metal, and be further provided with an insulating coating on one or other or both of their internal and external surfaces over all or part of their lengths, with a combustion catalyst or the like being coated or otherwise provided over the insulating coating. Preferably, the portions of the conduits made out of or coated with an insulating material are those which are located within the pockets. This helps to reduce heat transfer from the conduits and therefore promotes combustion of the combustible mixture at high temperatures so as to reduce, for example, the emission of incompletely combusted hydrocarbons or carbon monoxide from the reactor.

Because the conduits do not generally contribute to the mechanical integrity of the reactor, they may be fabricated from a material or materials chosen for improved catalyst adhesion properties rather than for physical strength. Examples include ceramics or high alumina steel such as "Fecralloy"®. The second member on which the conduits are supported will generally be at a lower temperature than the conduits themselves, and may thus be made of a material suitable for bonding to the conduits, such as an epoxy resin.

The pockets may be made out of metal or out of other suitable materials. For endothermic reactions in the first volume where coke formation on metal surfaces is a problem (e.g. pyrolysis of hydrocarbon streams), the pockets may be fabricated from a material having the necessary structural integrity and then coated with a further material chosen so as to inhibit coke formation and laydown. The design of the reactor of embodiments of the present invention makes this easy to do after fabrication and immediately before final assembly of the reactor.

The reactor of embodiments of the present invention provides several advantages over conventional reactors.

Firstly, intimate contact of the appropriate catalyst which promotes the endothermic reaction with external surfaces of the pockets means that heat generated within the pockets has an excellent transfer path to the region where the endothermic reaction is taking place.

Secondly, because the conduits are not physically connected to the pockets along their lengths, thermal expansion of the conduits and pockets as the reactor heats up can be easily accommodated without leading to thermal stresses.

Thirdly, the reactor may be assembled using conventional techniques employed in the fabrication of, for example, tube and shell heat exchangers. Other construction methods are not excluded.

Fourthly, the catalysts may be coated or packed before final assembly of the reactor because the first and second members and their associated pockets and conduits may be easily separated from each other. This also allows for easy refurbishment of the catalysts when they are exhausted and also for easy removal of catalysts, as part of general maintenance, by techniques such as high-pressure water jetting. Furthermore, the conduits and/or the pockets may be coated or recoated with catalyst by dipping them in, say, a catalytic sol-gel. It is then easy to see how well the catalyst coating has been applied prior to final assembly or reassembly of the reactor.

Fifthly, the temperatures inside and immediately outside the conduits in the regions located within the pockets tend to be higher, during use of the reactor, than the temperature of the catalyst on the pocket surface, making it easier to achieve high conversions of the combustible reactant or mixture of reactants. The provision of a serpentine or labyrinthine flowpath passing along the outsides of the conduits and then back along the insides of the conduits (or *vice versa*) allows the temperature to be kept high even when the concentration of combustible mixture is low, for example towards the end of the flowpath, thus helping to promote conversion efficiency. This is a significant advantage over known plate reactors which do not provide such a serpentine or labyrinthine flowpath.

Sixthly, embodiments of the present invention may be particularly advantageous when used for conducting endothermic reactions requiring a relatively low temperature, e.g. propane dehydrogenation which requires a temperature between 650 and 700°C. The temperature of the combustion catalyst on or around the conduits will be considerably higher than the process temperature in the first volume, thus sustaining a higher rate for the combustion reaction. In a plate reactor, there tends to be little difference between the process temperature and the combustion temperature throughout the reactor.

Seventhly, by making the internal spacings between the conduits and the pockets relatively small, and optionally by providing packing or extended structures or fins around the conduits, it is possible to keep the dimensions of the flowpath through the second volume below flame trap dimensions, thus helping to promote flameless combustion and hence low NOₓ emissions.

Eighthly, intimate thermal contact between incoming combustible reactant or mixture of reactants from the second inlet and outgoing hot combustion products to the second outlet in a region of the reactor between the first and second members helps to preheat the incoming combustible reactant or mixture of reactants to a temperature near the reaction temperature and also to recover enthalpy from the outgoing hot combustion products.

Ninthly, where heat is generated through regeneration of catalyst on the internal or external surfaces of the pockets and/or the internal or external surfaces of the conduits, or through removal of coke from these regions, a coolant fluid (e.g. air) may be circulated through the pockets to aid heat removal. For this purpose, provision of an additional inlet or inlets to the second volume of the reactor in the vicinity of the first member may be desirable in order to reduce unwanted heat exchange in this region. This additional inlet or inlets, or a similar inlet or inlets, may also be used during start-up of the reactor for introducing a preheating fluid (e.g. a heated gas) into the second volume and/or the at least one pocket.

For a better understanding of the present invention and to show how it may be carried into effect, reference shall now be made, by way of example, to the accompanying drawings, in which:
FIGURE 1 is a longitudinal cross-section through a first embodiment of a reactor of the present invention;
FIGURE 2 is a detail of a conduit inserted in a pocket in the reactor of Figure 1;
FIGURE 3 shows a transverse cross-section through a second embodiment of a reactor of the present invention; and
FIGURE 4 shows a side view on section A-A through the reactor of Figure 3.

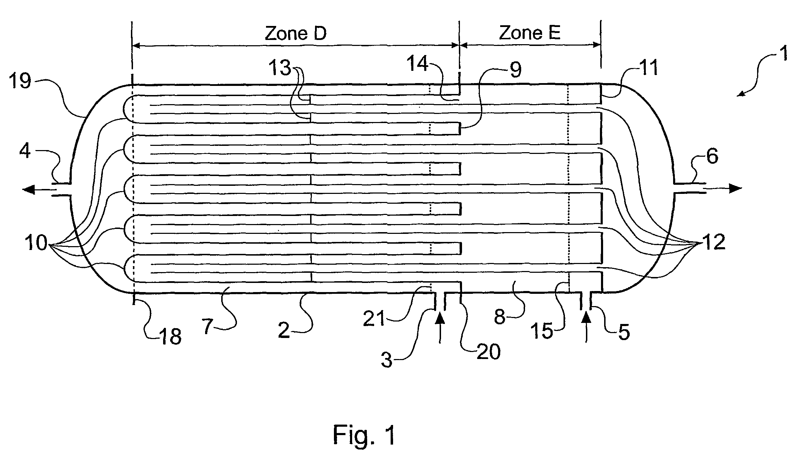

Referring firstly to Figure 1, there is shown a reactor 1 comprising a gas-tight shell 2 having a first inlet 3 and a first outlet 4, and a second inlet 5 and a second outlet 6. The reactor 1 is divided into a first volume 7 and a second volume 8 by way of an internal structure including a first tube plate 9 which extends across the shell 2 and which supports a number of tubular elongate pockets 10. In the embodiment of Figure 1, only five pockets 10 are shown, but it will be appreciated that any suitable number of pockets 10 may be provided. The elongate pockets 10 extend generally transversely from the first tube plate 9 into the first volume 7, and the first inlet 3 and first outlet 4 are arranged so as to define a flowpath through the first volume 7 from the first inlet 3 to the first outlet 4 by way of external surfaces of the pockets 10.

A second tube plate 11 extends across the shell 2 in the second volume 8, and supports a number of tubular elongate conduits 12 corresponding to the number of pockets 10. The conduits 12 extend from the second tube plate 11, across the second volume 8 and into the pockets 10. The conduits 12 are open-ended and extend almost, but not quite, to the ends of the pockets 10. The second inlet 5 and second outlet 6 are arranged so as to define a flowpath through the second volume 8 from the second inlet 5, along outer surfaces of the conduits 12 and into the pockets 10 towards the ends of the pockets, and then into the conduits 12, passing along inside the conduits 12 towards the second tune plate 11 and thence to the second outlet 6.

Guide members 13 are optionally provided so as to support the conduits 12 within the pockets 10, and gas-tight seals (not shown) are provided between the first and second tube plates 9 and 11 and the shell 2.

For ease of reference, the portion of the reactor 1 across which the pockets 10 extend will be denoted as zone D, and the portion of the reactor in which the conduits 12 extend from the second tube plate 11 to the mouths 14 of the pockets 10 will be denoted as zone E, as labelled in Figure 1.

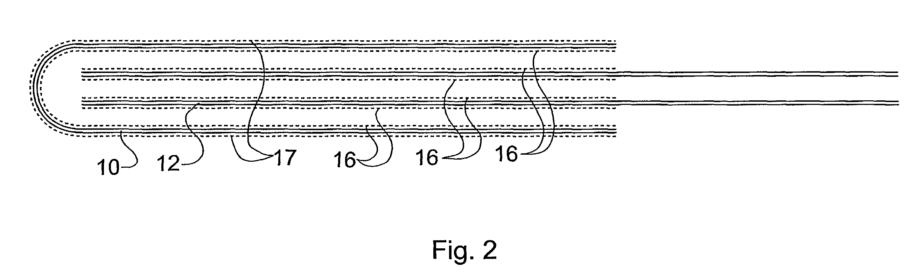

In use, a combustible mixture (not shown) enters the reactor 1 at the second inlet 5 and travels, by way of an optional distribution plate 15, through zone E. After passing through the first tube plate 9, the mixture enters the pockets 10 in zone D. In zone D, combustion of the mixture is promoted by a combustion catalyst 16 (shown in Figure 2) which is coated on the internal surfaces of the pockets 10 and on either one or both of the internal and external surfaces of the conduits 12. The mixture passes along inside the pockets 10 and then returns inside the conduits 12, undergoing further combustion promoted by combustion catalyst 16, and then passes through zone E and the second tube plate 11 to the second outlet 6. In zone E, hot products of combustion (not shown) in the conduits 12 serve to heat the incoming mixture from the second inlet 5, this heat transfer helping to remove heat from the combusted mixture leaving from the second outlet 6 so as to provide good thermal efficiency.

A greater part of the heat generated by catalytic combustion in the second volume 8 is conducted through the walls of the pockets 10 in zone D, where it is available for performing endothermic reactions or to heat a fluid in the first volume 7. Feedstock (not shown) for endothermic reactions or a fluid to be heated enters the first volume 7 in zone D of the reactor 1 by way of the first inlet 3 and leaves the reactor by way of the first outlet 4. Alternatively, the flow may be reversed. Examples of non-catalytic processes that may be conducted in the first volume 7 in zone D include superheating of steam or other process fluids (not shown) or thermal decomposition of hydrocarbons such as paraffinic feedstocks to produce olefins. Alternatively, catalytic endothermic reactions may be conducted in the first volume 7 in zone D, and an appropriate catalyst 17 (shown in Figure 2) may be coated on external surfaces of the pockets 10, packed or otherwise provided between the pockets 10 in zone D, or a combination of both.

Packing, removal and replacement of the catalyst 17, or recoating of the catalyst 17, is facilitated by providing a flange 18 at an end 19 of the reactor 1 nearest the ends of the pockets 10 so as to allow the end 19 of the reactor 1 to be removed and thus to expose the pockets 10.

Similarly, provision of a flange 20 which allows the reactor 1 to be separated into its first and second volumes 7, 8, for example about the first tube plate 9, facilitates refurbishment of the combustion catalyst 16 on the internal surfaces of the pockets 10 and on the surfaces of the conduits 12.

Figure 2 shows a more detailed view of a conduit 12 inserted into a pocket 10. Combustion catalyst 16 is coated on an inner surface of the pocket 10 and on both inner and outer surfaces of the conduit 12. Heat generated by combustion of the combustible mixture on the inner surface of the pocket 10 is transferred mainly by conduction to zone D of Figure 1, where the endothermic reaction or heating process takes place. A mixture of radiation and convection transfers the heat generated on the outer surface of the conduit 12 to the pocket 10. This is not a very efficient process, and so the surface temperature of the conduit 12 will be considerably higher than that of the pocket 10 and the rate of combustion will be higher than on the combustion catalyst 16 on the pocket 10. The combustible mixture leaving via the conduit 12 will continue to combust and heat transfer from this mixture through the walls of the conduit 12 will not be good, leading to an even higher temperature and substantially complete conversion. The heat carried from zone D by the combustible mixture may be recovered by heat exchange with incoming combustible mixture in zone E.

The outer surface of the pocket 10 may be coated with an appropriate catalyst 17 so as to promote the endothermic reaction taking place in the first volume 8 in zone D.

In typical, but non-limiting, example of the present invention, the pockets 10 are generally tubular and have an outer diameter from 6 to 15mm and an inner diameter from 5 to 14mm. The conduits 12 are also generally tubular and have an outer diameter from 2.5 to 13.5mm and an inner diameter from 1.5 to 12.5mm, thus leaving an annulus between each conduit 12 and its associated pocket 10 of approximately 0.5 to 2.5mm. The pockets 10 have a length generally from 0.1 to 1m. With a spacing between the pockets 10 of the order of 1 to 4mm, a heat flux of 20kW/m² at the outer surface of the pocket 10 gives an overall heat generation of up to 4MW/m³. Elementary calculations show that up to 40% of the heat can be generated on the conduits 12 without inducing large temperature excursions. The temperature of the conduits 12 is then approximately 40°C higher than that of the pockets 10.

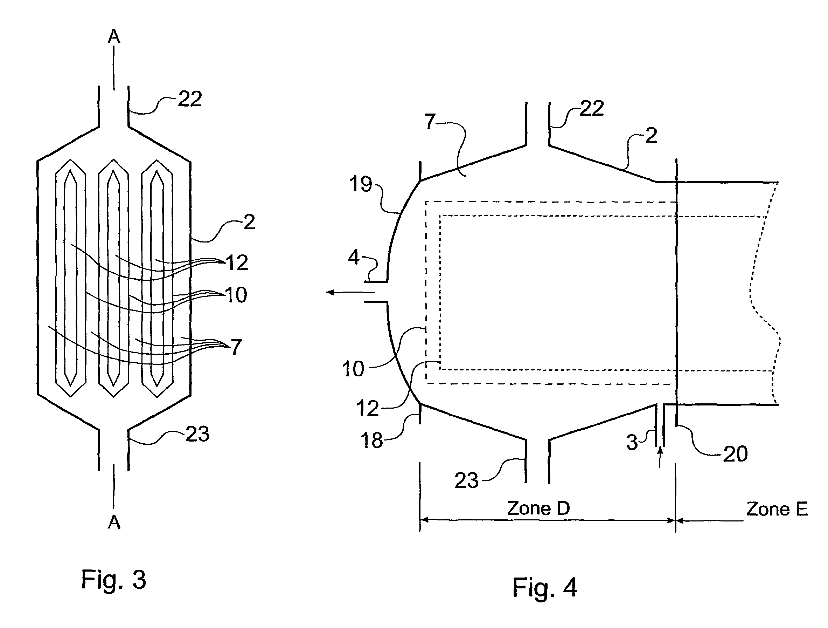

Figure 3 shows an end view of a transverse section through zone D of an alternative embodiment of the reactor of the present invention. The same reference numbers used in relation to Figures 1 and 2 are used here for similar components, and all of the features described in relation to the reactor of Figures 1 and 2 may also be provided in the reactor of Figure 3. The reactor of Figure 3 comprises a shell 2 including pockets 10 and conduits 12 (shown within the first volume 7) having an elongated polygonal cross-section. Three pairs of pockets 10 and conduits 12 are shown, but it will be appreciated that any appropriate number may be installed. In addition to the various inlets and outlets shown in relation to the reactor of Figures 1 and 2, the shell 2 of the reactor of Figure 3 includes an additional inlet 22 and outlet 23 within zone D for supplying a particulate catalyst of appropriate particle size through the first volume 7 for promoting an endothermic reaction taking place therein. The elongated polygonal cross-section of the pockets 10 and conduits 12 helps to promote even flow of the particulate catalyst through the first volume 7.

Figure 4 shows a longitudinal cross-section along line A-A of Figure 3, showing the shell generally at 2 with a first inlet 3 and a first outlet 4 for the ingress and egress of reactants and products involved in an endothermic reaction within a first volume 7 within zone D of the reactor. The pockets 10 and conduits 12 are shown in cross-section, with the pockets 10 mounted on tube plate 20. A flange 18 is provided across an end 19 of the reactor. In most respects, the reactor of Figures 3 and 4 functions identically to that of Figures 1 and 2, with the exception that the additional inlet 22 and outlet 23 are provided in the shell 2 so as to allow ingress and egress of a particulate catalyst (not shown) into and out of the first volume 7, thus helping to promote an endothermic reaction taking place therein.

## Claims

1. A reactor (1) comprising a shell (2) having at least a first inlet (3), a first outlet (4), a second inlet (5) and a second outlet (6), and an internal structure which divides the shell (2) into first (7) and second (8) non-communicating volumes, the first inlet (3) and first outlet (4) being associated with the first volume (7) and the second inlet (5) and second outlet (6) being associated with the second volume (8), wherein the internal structure comprises a first member (9) which extends internally across the shell (2) so as to divide the shell (2) into said first and second volumes (7,8), the first member (9) having at least one elongate pocket (10) with an internal and an external surface, the pocket (10) extending into the first volume (7), and a second member (11) which extends internally across the shell (2) in the second volume (8) and which carries at least one elongate conduit (12) having an internal and an external surface, the conduit (12) allowing communication through the second member (11) and being received by the at least one pocket (10), **characterised in that** a catalyst (16) adapted to promote an exothermic reaction is provided at the internal surface of the at least one elongate conduit (12) such that there is defined a pathway through the reactor (1) along which a reactant capable of undergoing an exothermic reaction may be passed, the pathway leading from the second inlet (5), between the external surface of the at least one conduit (12) and the internal surface of the at least one pocket (10), through the at least one conduit (12) and thence to the second outlet (6).

2. A reactor (1) as claimed in claim 1, wherein the catalyst (16) is additionally provided at the external surface of the at least one conduit (12).

3. A reactor (1) as claimed in claim 1 or 2, wherein the catalyst (16) is additionally provided at the internal surface of the at least one pocket (10).

4. A reactor (1) as claimed in any preceding claim, wherein there is provided a plurality of elongate pockets (10) and conduits (12), each pocket (10) receiving an associated conduit (12).

5. A reactor (1) as claimed in any preceding claim, wherein the catalyst (16) is a combustion catalyst.

6. A reactor (1) as claimed in claim 5, wherein the combustion catalyst (16) is coated onto one or more of the surfaces.

7. A reactor (1) as claimed in claim 5 or 6, wherein the combustion catalyst (16) is packed into or around the at least one conduit (12).

8. A reactor (1) as claimed in claim 5, wherein the combustion catalyst (16) is provided on an insert which is located within the at least one conduit (12).

9. A reactor (1) as claimed in any preceding claim, wherein a reaction catalyst (17) is coated or otherwise provided on or about external surfaces of the pockets (10).

10. A reactor (1) as claimed in any preceding claim, wherein the shell (2) is provided with a third inlet (22) and a third outlet (23) to the first volume (7), the third inlet (22) and third outlet (23) being adapted for passage of a reaction catalyst (17) through the first volume (7) from the third inlet (22) to the third outlet (23).

11. A reactor (1) as claimed in any preceding claim, wherein the at least one pocket (10) is in the form of a blind-ended tube extending generally transversely from the first member (9).

12. A reactor (1) as claimed in any preceding claim, wherein the at least one conduit (12) is in the form of an open-ended tube extending generally transversely from the second member (11).

13. A reactor (1) as claimed in claim 11 or 12, wherein the tubes (10,12) are of circular, elliptical or polygonal cross-section.

14. A reactor (1) as claimed in any one of claims 1 to 10, wherein the at least one pocket (10) is in the form of a generally flattened, blind-ended, elongate sheath and the at least one conduit (12) is correspondingly shaped so as to fit inside the at least one pocket (10).

15. A reactor (1) as claimed in any one of claims 11 to 13, wherein the first and second members (9,11) are tube plates.

16. A reactor (1) as claimed in any preceding claim, wherein the shell (2) is provided with means (18,20) enabling access to the at least one pocket (10).

17. A reactor (1) as claimed in any preceding claim, wherein the shell (2) is provided with means (20) enabling access to the at least one conduit (12).

18. A reactor (1) as claimed in claim 16 or 17, wherein the shell (2) may be separated into two parts, one part including the first member (9) and the second part including the second member (11), and wherein the at least one pocket (10) and the at least one conduit (12) are shaped so as to allow the at least one conduit (12) to be withdrawn from the at least one pocket (10) upon separation of the shell (2) into its two parts.

19. A reactor (1) as claimed in any preceding claim, wherein external surfaces of the at least one conduit (12) are provided with fins or other extended structures adapted to aid heat transfer.

20. A reactor (1) as claimed in any preceding claim, wherein a packing is provided about the at least one conduit (12).

21. A reactor (1) as claimed in any preceding claim, wherein external surfaces of the at least one pocket (10) are provided with fins or other extended structures so as to aid heat transfer.

22. A reactor (1) as claimed in any preceding claim, wherein the at least one conduit (12) has a lower thermal conductivity than the at least one pocket (10).

23. A reactor (1) as claimed in any preceding claim, wherein spaces within the at least one conduit (12) and/or between the at least one conduit (12) and the at least one pocket (10) are at or below flame trap dimensions so as to prevent uncontrolled reactant combustion therein.

24. A reactor (1) as claimed in any preceding claim, wherein spaces within the at least one conduit (12) and/or between the at least one conduit (12) and the at least one pocket (10) are packed with a suitable packing material so as to keep the spaces at or below flame trap dimensions, thereby preventing uncontrolled reactant combustion therein.

25. A reactor (1) as claimed in any preceding claim, wherein an external surface of the at least one pocket (10) is coated or otherwise provided with a material that inhibits coke formation or laydown.

26. A reactor (1) as claimed in any preceding claim, wherein the shell (2) is further provided with at least one additional inlet to the second volume (8) in a vicinity of the first member (9), by way of which at least one additional inlet a coolant fluid may be introduced into the at least one pocket (10) without being substantially preheated in the second volume (8).

27. A reactor (1) as claimed in any preceding claim, wherein the shell (2) is further provided with at least one additional inlet to the second volume (8) in a vicinity of the first member (9), by way of which at least one additional inlet a preheating fluid may be introduced into the second volume (8) and/or the least one pocket (10).

28. A reactor (1) as claimed in any preceding claim, wherein the catalyst (16) is coated to different thicknesses on different surfaces.

29. A reactor (1) as claimed in any preceding claim, wherein the catalyst (16) is coated on at least one surface and wherein a thickness of the catalyst (16) varies along the surface.

## Patentansprüche

1. Reaktor (1) mit einem Mantel (2), der mindestens einen ersten Einlass (3), einen ersten Auslass (4), einen zweiten Einlass (5) und einen zweiten Auslass (6) aufweist, und einer Innenkonstruktion, die den Mantel (2) in ein erstes (7) und ein zweites (8) Volumen unterteilt, die nicht miteinander in Verbindung stehen, wobei der erste Einlass (3) und der erste Auslass (4) dem ersten Volumen (7) zugeordnet sind und der zweite Einlass (5) und der zweite Auslass (6) dem zweiten Volumen (8) zugeordnet sind, wobei die Innenkonstruktion ein erstes Glied (9), das sich innen quer durch den Mantel (2) erstreckt, um diesen in das erste und das zweite Volumen (7, 8) zu unterteilen, wobei das erste Glied (9) mindestens eine längliche Tasche (10) mit einer Innen- und einer Außenfläche aufweist und sich die Tasche (10) in das erste Volumen (7) erstreckt, und ein zweites Glied (11) aufweist, das sich im zweiten Volumen (8) innen quer durch den Mantel (2) erstreckt und mindestens eine längliche Leitung (12) trägt, die eine Innen- und eine Außenfläche aufweist, wobei die Leitung (12) eine Verbindung durch das zweite Glied (11) gestattet und durch die mindestens eine Tasche (10) aufgenommen wird, **dadurch gekennzeichnet, dass** ein zur Förderung einer exothermen Reaktion ausgeführter Katalysator (16) an der Innenfläche der mindestens einen länglichen Leitung (12) vorgesehen ist, so dass durch den Reaktor (1) ein Weg definiert wird, entlang dem ein Reaktionsmittel, das einer exothermen Reaktion unterzogen werden kann, geleitet werden kann, wobei der Weg von dem zweiten Einlass (5), zwischen der Außenfläche der mindestens einen Leitung (12) und der Innenfläche der mindestens einen Tasche (10), durch die mindestens eine Leitung (12) und von dort zum zweiten Auslass (6) führt.

2. Reaktor (1) nach Anspruch 1, bei dem der Katalysator (16) darüber hinaus an der Außenfläche der mindestens einen Leitung (12) vorgesehen ist.

3. Reaktor (1) nach Anspruch 1 oder 2, bei dem der Katalysator (16) darüber hinaus an der Innenfläche der mindestens einen Tasche (10) vorgesehen ist.

4. Reaktor (1) nach einem der vorhergehenden Ansprüche, bei dem mehrere längliche Taschen (10) und Leitungen (12) vorgesehen sind, wobei jede Tasche (10) eine zugehörige Leitung (12) aufnimmt.

5. Reaktor (1) nach einem der vorhergehenden Ansprüche, bei dem es sich bei dem Katalysator (16) um einen Verbrennungskatalysator handelt.

6. Reaktor (1) nach Anspruch 5, bei dem der Verbrennungskatalysator (16) auf einer oder mehreren der Flächen aufgetragen ist.

7. Reaktor (1) nach Anspruch 5 oder 6, bei dem der Verbrennungskatalysator (16) in die mindestens eine Leitung (12) oder um sie herum gepackt ist.

8. Reaktor (1) nach Anspruch 5, bei dem der Verbrennungskatalysator (16) an einem Einsatz vorgesehen ist, der sich in der mindestens einen Leitung (12) befindet.

9. Reaktor (1) nach einem der vorhergehenden Ansprüche, bei dem ein Reaktionskatalysator (17) auf die Außenflächen der Taschen (10) aufgetragen oder auf andere Weise darauf oder um diese herum vorgesehen ist.

10. Reaktor (1) nach einem der vorhergehenden Ansprüche, bei dem der Mantel (2) mit einem dritten Einlass (22) und einem dritten Auslass (23) zum ersten Volumen (7) versehen ist, wobei der dritte Einlass (22) und der dritte Auslass (23) zum Hindurchleiten eines Reaktionskatalysators (17) durch das erste Volumen (7) vom dritten Einlass (22) zum dritten Auslass (23) ausgeführt sind.

11. Reaktor (1) nach einem der vorhergehenden Ansprüche, bei dem die mindestens eine Tasche (10) in Form eines Sackrohrs vorliegt, das sich von dem ersten Glied (9) allgemein quer erstreckt.

12. Reaktor (1) nach einem der vorhergehenden Ansprüche, bei dem die mindestens eine Leitung (12) in Form eines Rohrs mit offenem Ende vorliegt, das sich vom zweiten Glied (11) allgemein quer erstreckt.

13. Reaktor (1) nach Anspruch 11 oder 12, bei dem die Rohre (10, 12) einen kreisförmigen, elliptischen oder polygonalen Querschnitt aufweisen.

14. Reaktor (1) nach einem der Ansprüche 1 bis 10, bei dem die mindestens eine Tasche (10) in Form einer allgemein abgeflachten, ein Sackende aufweisenden, länglichen Hülle vorliegt und die mindestens eine Leitung (12) entsprechend geformt ist, so dass sie in die mindestens eine Tasche (10) passt.

15. Reaktor (1) nach einem der Ansprüche 11 bis 13, bei dem das erste und das zweite Glied (9, 11) Rohrplatten sind.

16. Reaktor (1) nach einem der vorhergehenden Ansprüche, bei dem der Mantel (2) mit Mitteln (18, 20) versehen ist, die Zugang zu der mindestens einen Tasche (10) ermöglichen.

17. Reaktor (1) nach einem der vorhergehenden Ansprüche, bei dem der Mantel (2) mit Mitteln (20) versehen ist, die Zugang zu der mindestens einen Leitung (12) ermöglichen.

18. Reaktor (1) nach Anspruch 16 oder 17, bei dem der Mantel (2) in zwei Teile getrennt sein kann, einen Teil, der das erste Glied (9) enthält, und den zweiten Teil, der das zweite Glied (11) enthält, und bei dem die mindestens eine Tasche (10) und die mindestens eine Leitung (12) so geformt sind, dass sie es gestatten, dass die mindestens eine Leitung (12) beim Trennen des Mantels (2) in seine beiden Teile aus der mindestens einen Tasche (10) herausgezogen wird.

19. Reaktor (1) nach einem der vorhergehenden Ansprüche, bei dem Außenflächen der mindestens einen Leitung (12) mit Rippen oder anderen verlängerten Konstruktionen, die zur Unterstützung der Wärmeübertragung ausgeführt sind, versehen sind.

20. Reaktor (1) nach einem der vorhergehenden Ansprüche, bei dem um die mindestens eine Leitung (12) herum ein Füllmaterial vorgesehen ist.

21. Reaktor (1) nach einem der vorhergehenden Ansprüche, bei dem Außenflächen der mindestens einen Tasche (10) mit Rippen oder anderen verlängerten Konstruktionen zwecks Unterstützung der Wärmeübertragung versehen sind.

22. Reaktor (1) nach einem der vorhergehenden Ansprüche, bei dem die mindestens eine Leitung (12) eine geringere Wärmeleitfähigkeit aufweist als die mindestens eine Tasche (10).

23. Reaktor (1) nach einem der vorhergehenden Ansprüche, bei dem Räume in der mindestens einen Leitung (12) und/oder zwischen der mindestens einen Leitung (12) und der mindestens einen Tasche (10) Flammensperrenabmessungen aufweisen oder kleiner sind, um eine unkontrollierte Reaktionsmittelverbrennung darin zu verhindern.

24. Reaktor (1) nach einem der vorhergehenden Ansprüche, bei dem Räume in der mindestens einen Leitung (12) und/oder zwischen der mindestens einen Leitung (12) und der mindestens einen Tasche (10) mit einem geeigneten Füllmaterial gepackt sind, um die Räume auf Flammensperrenabmessungen oder kleiner zu halten, wodurch eine unkontrollierte Reaktionsmittelverbrennung darin verhindert wird.

25. Reaktor (1) nach einem der vorhergehenden Ansprüche, bei dem eine Außenfläche der mindestens einen Tasche (10) beschichtet oder auf andere Weise mit einem Material versehen ist, das Koksbildung oder -ablagerung verhindert.

26. Reaktor (1) nach einem der vorhergehenden Ansprüche, bei dem der Mantel (2) weiterhin mit mindestens einem zusätzlichen Einlass zum zweiten Volumen (8) in der Nähe des ersten Glieds (9) versehen ist, wobei mittels dieses mindestens einen zusätzlichen Einlasses ein Kühlfluid in die mindestens eine Tasche (10) eingeleitet werden kann, ohne im zweiten Volumen (8) wesentlich vorgeheizt zu werden.

27. Reaktor (1) nach einem der vorhergehenden Ansprüche, bei dem der Mantel (2) weiterhin mit mindestens einem Einlass zum zweiten Volumen (8) in der Nähe des ersten Glieds (9) versehen ist, wobei mittels dieses mindestens einen Einlasses ein Vorheizfluid in das zweite Volumen (8) und/oder die mindestens eine Tasche (10) eingeleitet werden kann.

28. Reaktor (1) nach einem der vorhergehenden Ansprüche, bei dem der Katalysator (16) an verschiedenen Flächen auf verschiedene Dicken beschichtet ist.

29. Reaktor (1) nach einem der vorhergehenden Ansprüche, bei dem der Katalysator (16) auf mindestens einer Fläche beschichtet ist und bei dem eine Dicke des Katalysators (16) entlang der Fläche variiert.

## Revendications

1. Réacteur (1) comprenant une coquille (2) ayant au moins une première entrée (3), une première sortie (4), une seconde entrée (5) et une seconde sortie (6), et une structure interne qui divise la coquille en un premier (7) et second (8) volumes non communiquant, la première entrée (3) et la première sortie (4) étant associées avec le premier volume (7) et la seconde entrée (5) et la seconde sortie (6) étant associées avec le second volume (8), **caractérisé en ce que** la structure interne comprend un premier élément (9) qui s'étend de manière interne à travers la coquille (2) de manière à diviser la coquille (2) dans lesdits premier et second volumes (7, 8), le premier élément (9) ayant au moins une pochette allongée (10) avec une surface interne et une surface externe, la pochette (10) s'étendant dans le premier volume (7), et un second élément (11) qui s'étend de manière interne à travers la coquille (2) dans le second volume (8) et qui porte au moins un conduit allongé (12) ayant une surface interne et externe, le conduit (12) autorisant la communication à travers le second élément (11) et étant reçu par au moins une pochette (10), **caractérisé en ce qu'**un catalyseur (16) adapté pour améliorer une réaction exothermique est prévu sur la surface interne dudit au moins un conduit allongé (12) de manière à ce qu'il y ait un chemin défini à travers le réacteur (1) le long duquel un réactif capable de subir une réaction exothermique peut être passé, le chemin partant de la seconde entrée (5), entre la surface externe dudit au moins un conduit (12) et la surface interne de ladite au moins une pochette (10), à travers ledit au moins un conduit (12) et ensuite vers la seconde sortie (6).

2. Réacteur (1) selon la revendication 1, **caractérisé en ce que** le catalyseur (16) est de manière supplémentaire fourni sur la surface externe du au moins un conduit (12).

3. Réacteur (1) selon la revendication 1 ou 2, **caractérisé en ce que** le catalyseur (16) est fourni de manière supplémentaire sur la surface interne de la au moins une pochette (10).

4. Réacteur (1) selon l'une des revendications précédentes, **caractérisé en ce qu'**il est prévu une pluralité de pochettes allongées (10) et de conduits (12), chaque pochette (10) recevant un conduit associé (12).

5. Réacteur (1) selon l'une des revendications précédentes, **caractérisé en ce que** le catalyseur (16) est un catalyseur de combustion.

6. Réacteur (1) selon la revendication 5, **caractérisé en ce que** le catalyseur de combustion (16) est revêtu sur une ou plusieurs des surfaces.

7. Réacteur (1) selon l'une des revendications 5 ou 6, **caractérisé en ce que** le catalyseur de combustion (16) est emballé dans ou autour dudit au moins un conduit (12).

8. Réacteur (1) selon la revendication 5, **caractérisé en ce que** le catalyseur de combustion (16) est fourni sur un insert qui est disposé dans le au moins un conduit (12).

9. Réacteur (1) selon l'une des revendications précédentes, **caractérisé en ce qu'**un catalyseur de réaction (17) est revêtu ou sinon fourni sur ou autour des surfaces externes des pochettes (10).

10. Réacteur (1) selon l'une des revendications précédentes, **caractérisé en ce que** la coquille (2) est fournie avec une troisième entrée (22) et une troisième sortie (23) au premier volume (7), la troisième entrée (22) et la troisième sortie (23) étant adaptées pour le passage d'un catalyseur de réaction (17) à travers le premier volume (7) issu de la première entrée (22) vers la première sortie (23).

11. Réacteur (1) selon l'une des revendications précédentes, **caractérisé en ce que** ladite au moins une pochette (10) est sous la forme d'un tube operculé s'étendant de manière générale transversalement à partir du premier élément (9).

12. Réacteur (1) selon l'une des revendications précédentes, **caractérisé en ce que** le au moins un conduit (12) est sous la forme d'un tube ouvert s'étendant de manière générale transversalement à partir du second élément (11).

13. Réacteur (1) selon l'une des revendications 1 ou 12, **caractérisé en ce que** les tubes (10, 12) sont de section transversale circulaire, elliptique ou polygonale.

14. Réacteur (1) selon l'une des revendications 1 à 10, **caractérisé en ce que** ladite au moins une pochette (10) est sous la forme d'une gaine allongée, operculée, de manière générale aplatie et **en ce que** le au moins un conduit (12) est conformé de manière correspondante afin de s'ajuster dans la au moins une pochette (10).

15. Réacteur (1) selon l'une des revendications 11 à 13, **caractérisé en ce que** les premier et second élément (9, 11) sont des plaques tubulaires.

16. Réacteur (1) selon l'une des revendications précédentes, **caractérisé en ce que** la coquille (2) est fournie avec des moyens (18, 20) permettant l'accès à la au moins une pochette (10).

17. Réacteur (1) selon l'une des revendications précédentes, **caractérisé en ce que** la coquille (2) est fournie avec des moyens (20) permettant l'accès au au moins un conduit (12).

18. Réacteur (1) selon l'une des revendications 16 ou 17, **caractérisé en ce que** la coquille (2) peut être séparée en deux parties, une partie incluant le premier élément (9) et la seconde partie incluant le second élément (11), et **en ce que** la au moins une pochette (10) et le au moins un conduit (12) sont formés de manière à autoriser le au moins un conduit (12) à être retiré de la au moins une pochette (10) lors de la séparation de la coquille (2) dans ses deux parties.

19. Réacteur (1) selon l'une des revendications précédentes, **caractérisé en ce que** les surfaces externes du au moins un conduit (12) sont prévues avec des ailettes ou d'autres structures étendues adaptées pour faciliter le transfert de chaleur,

20. Réacteur (1) selon l'une des revendications précédentes, **caractérisé en ce qu'**un emballage est prévu autour du au moins un conduit (12).

21. Réacteur (1) selon l'une des revendications précédentes, **caractérisé en ce que** les surfaces externes de la au moins une pochette (10) sont prévues avec des ailettes ou d'autres structures étendues de manière à faciliter le transfert de chaleur.

22. Réacteur (1) selon l'une des revendications précédentes, **caractérisé en ce que** le au moins un conduit (12) a une conductivité thermique inférieure à la au moins une pochette (10).

23. Réacteur (1) selon l'une des revendications précédentes, **caractérisé en ce que** des espaces dans le au moins un conduit (12) et/ou entre le au moins un conduit (12) et la au moins une pochette (10) sont égaux ou inférieurs à des dimensions de pare flamme de manière à prévenir une combustion réactive incontrôlée dedans.

24. Réacteur (1) selon l'une des revendications précédentes, **caractérisé en ce que** des espaces dans le au moins un conduit (12) et/ou entre le au moins un conduit (12) et la au moins une pochette (10) sont emballés avec une substance d'emballage appropriée de manière à conserver les espaces à ou sous des dimensions de pare flamme prévenant ainsi une combustion réactive incontrôlée dedans.

25. Réacteur (1) selon l'une des revendications précédentes, **caractérisé en ce qu'**une surface externe de la au moins une pochette (10) est revêtue ou sinon prévue avec une substance qui inhibe le dépôt ou la formation de coke.

26. Réacteur (1) selon l'une des revendications précédentes, **caractérisé en ce que** la coquille (2) est de plus fournie avec au moins une entrée supplémentaire au second volume (8) au voisinage du premier élément (9), un fluide de refroidissement au moyen de la au moins une entrée supplémentaire peut être introduit dans la au moins une pochette (10) sans être sensiblement préchauffé dans le second volume (8).

27. Réacteur (1) selon l'une des revendications précédentes, **caractérisé en ce que** la coquille (2) est de plus fournie avec au moins une entrée supplémentaire au second volume (8) au voisinage du premier élément (9), la au moins une entrée supplémentaire permettant à un fluide préchauffé d'être introduit dans le second volume (8) et/ou la au moins une pochette (10).

28. Réacteur (1) selon l'une des revendications précédentes, **caractérisé en ce que** le catalyseur (16) est revêtu avec différentes épaisseurs sur différentes surfaces.

29. Réacteur (1) selon l'une des revendications précédentes, **caractérisé en ce que** le catalyseur (16) est revêtu sur au moins une surface et **en ce qu'**une épaisseur du catalyseur (16) varie le long de la surface.
